## Europäisches Patentamt

## European Patent Office

## Office européen des brevets

(11) Publication number: **0 166 552**
**B1**

(12) **EUROPEAN PATENT SPECIFICATION**

(45) Date of publication of patent specification: **22.08.90**

(51) Int. Cl.⁵: **B 65 D 83/00**

(21) Application number: **85304122.6**

(22) Date of filing: **11.06.85**

(54) Extended surface apparatus for use in dispensing liquids.

(30) Priority: **12.06.84 AU 5450/84**
**20.06.84 AU 5586/84**
**12.07.84 AU 5964/84**
**05.09.84 AU 6939/84**
**27.02.85 AU 9475/85**

(43) Date of publication of application:
**02.01.86 Bulletin 86/01**

(45) Publication of the grant of the patent:
**22.08.90 Bulletin 90/34**

(84) Designated Contracting States:
**AT BE CH DE FR GB IT LI LU NL SE**

(56) References cited:
**DE-B-1 575 063**
**GB-A-1 478 607**
**US-A-4 027 789**

(73) Proprietor: **Ling, Carl Pui Chang**
**473 Beauchamp Road**
**Maroubra New South Wales 2035 (AU)**

(72) Inventor: **Ling, Carl Pui Chang**
**473 Beauchamp Road**
**Maroubra New South Wales 2035 (AU)**

(74) Representative: **Carter, Caroline Ann et al**
**ABEL & IMRAY Northumberland House 303-306**
**High Holborn**
**London WC1V 7LH (GB)**

Courier Press, Leamington Spa, England.

## Description

The present invention relates to dispensing devices and specifically to such devices which are commonly used to dispense a definite quantity of a liquid such as "eye drop" or "nasal spray".

Hitherto, dispensing devices have been objectionable for a number of reasons. The majority of dispensers comprise a resilient container and nozzle, sometimes with a tube connecting the nozzle with the contents of the container. Upon squeezing the container, maybe after inverting it, and then squeezing it, an indeterminate quantity of the liquid contents is expressed from the container. When the substance is a pharmaceutical composition, it may be undesirable to dispence more or less than a predetermined dose.

It is known to provide a capillary system within the dispensers which, when the dispenser is upturned, absorbs a quantity of the liquid contents to be dispensed. However, known capillary systems comprise, for example, a piece of bamboo cane which is inherently irregular in nature and not well adapted to use in the mass production of large numbers of dispensing devices each able to dispense a predetermined quantity of liquid. Also, irregular sized drops of the liquid are able to cling to the bamboo and are dispensed in addition to the predetermiend quantity. This affects the accuracy of such dispensers.

Alternative known dispensers comprise a pressurized vessel having a valve through which liquids may be forced in the form of spray by a propellant. Risk is involved in using such dispensers in that propellant such as Freon may enter the human body. Furthermore, such dispensers require a container able to withstand high pressures and a complex valve. These features add to the expense of the dispensers.

It is an object of the present invention to overcome or at least ameliorate the above-mentioned shortcomings of the prior art by simple means.

U.S. Specification No. 4027789 discloses a foaming device for generating and dispensing foams formed by mixing a gas with a foamable liquid. British Specification No. 1478607 discloses a foam dispenser which is capable of generating and dispensing foam in an upright or an inverted position.

The present invention provides an apparatus for use in a vessel for dispensing a liquid, comprising a nozzle assembly and an extended surface apparatus connected to the nozzle assembly, the extended surface apparatus comprising an array or arrays of spaced apart elements and communication means connecting said array or arrays and said nozzle assembly, characterised in that the elements are arranged such that, in use of the apparatus, they can be charged with the retain a predetermined dose of the liquid, utilising intermolecular attraction between said liquid and said elements, by means of the elements being brought into contact with and then removed from the body of liquid in the vessel, and the said liquid can be delivered from the elements to the nozzle assembly via the said communication means, whereby the apparatus can, in use, deliver a predetermined dosage of liquid.

The extended surface apparatus may comprise an annular array of circumferentially spaced apart elements. The elements of the extended surface apparatus may be connected with said nozzle assembly by a communication means, one end of which opens into a central passage defined by said annular array of elements. The elements may be fixed to a flared skirt projecting from said one end of said communication means. The array of elements may comprise a plurality of long elements interleaved with shorter elements. The extended surface apparatus may include a radially extending disk supported by the said elements, and from which extend a further array of elements. The elements may be tapered. The apparatus may include a gravitationally sealed one-way valve controlling flow along said communication means. The one-way valve may comprise a ball entrapped by said elements, and adapted to seal against one end of said communication means.

In one embodiment of the invention, the extended surface apparatus is contained within the nozzle assembly of the vessel. The apparatus may then include an absorbent pad disposed adjacent to said array of elements. The apparatus may include an air-duct through which air may pass from the interior of said vessel to mix with said dose of liquid, prior to explusion from said vessel. A further absorbent pad may be disposed adjacent the opening, within the dispenser, of said air-duct.

In another embodiment of the invention the extended surface apparatus includes an upturned cup having a plurality of slots disposed in a radial array around said cup, and an annular array of spaced apart elements disposed within and supported by said cup. The extended surface apparatus may then comprise a communication means having a first end disposed within a passage defined by said annular array of elements and a second end connected with said nozzle assembly.

In a preferred embodiment the extended surface apparatus is made of a plastics material with the vessel being of a resilient plastics material.

The vessel can also be comprised of numerous other resilient materials.

In another embodiment the spaced apart elements can be arranged in a configuration which, during the dispensing of the measured dose of liquid, creates a vortex effect in the liquid as it passes from the elements to the exit of the nozzle via the communication means. For example, the elements may be radially disposed and curvedly shaped.

It is an advantage of the present invention over the previously known capillary devices that an accurate dosage of the liquid to be dispensed can be achieved. The present invention does not rely on the capillary effects, and has the advantage that the extended surface apparatus can be contacted completely with the liquid, as the liquid can charge from many directions with the air easily being replaced by the liquid.

In the capillary system adhesive surface tension forces create a reasonably large resistance to the air and liquid stream resulting in the liquid not being completely expressed.

The present invention further provides a method of dispensing a predetermined dosage of a liquid from a collapsible vessel containing a liquid and including an apparatus comprising a nozzle assembly and an extended surface apparatus connected to the nozzle assembly, the extended surface apparatus comprising an array or arrays of spaced apart elements and communication means connecting said array or arrays and said nozzle assembly, wherein the elements are brought into contact with and then removed from the liquid in the vessel, a predetermined dose of the liquid being retained on the elements utilising intermolecular attraction between the said liquid and the said elements, and expelling a predetermined dosage of liquid through the nozzle assembly by forcing air across the elements so that liquid retained on the elements is conveyed via the communication means to the nozzle assembly.

Preferred embodiments of the present invention will now be described by way of non-limiting example only, with reference to the accompanying drawings in which:

Fig. 1 is a cross-sectional side elevation of the nozzle and extended surface apparatus of a dispensing vessel according to the present invention.

Fig. 2 is a side elevation of the extended surface apparatus shown in Fig. 1.

Fig. 3 is a schematic underview of the extended surface apparatus of Fig. 2 showing a configuration of the elements according to one embodiment of the present invention.

Fig. 4 is a cross-sectional view taken on line 4—4 of Fig. 1.

Fig. 5 is a side elevation of an extended surface apparatus including an additional drip-plate.

Fig. 6 is a cross-sectional side elevation of a nozzle and extended surface apparatus of a second embodiment of the present invention.

Fig. 7 is a cross-sectional side elevation of an extended surface apparatus of a third embodiment of the present invention.

Fig. 8 is a cross-sectional side elevation of an alternative nozzle and an extended surface apparatus shown in Fig. 1.

Fig. 9 is a cross-sectional side elevation of yet another alternative nozzle and an extended surface apparatus of a further embodiment of the present invention.

Fig. 10 is a cross-sectional view taken on line 10—10 of Fig. 9.

Fig. 11 is a cross-sectional side elevation of a dispenser according to a further embodiment of the present invention.

Fig. 12 is a cross-sectional side elevation of a nozzle and extended surface apparatus of another embodiment of the present invention.

Fig. 13 is a cross-sectional view taken on line 13—13 of Fig. 12, and

Fig. 14 is a cross-sectional view taken on line 14—14 of Fig. 12.

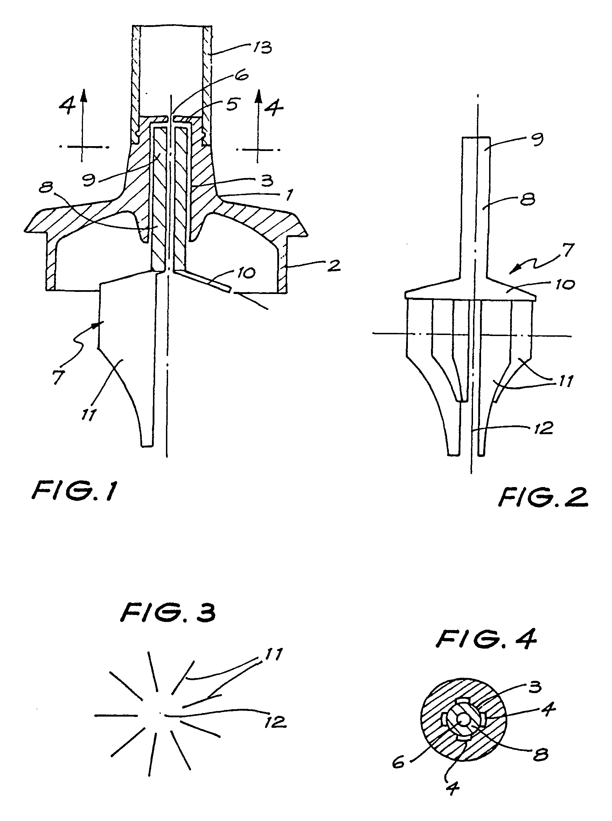

Referring first to Figs. 1, 2, 3 and 4, a nozzle assembly 1 has a peripheral flange 2 adapted to be fitted within the neck of a dispensing vessel in an air tight manner. Such vessels are well known and are generally manufactured from resilient plastics material. However, they may comprise, for example, a pressurized container.

The nozzle assembly 1 also has a blind bore 3 having a plurality of slots 4. The blind bore 3 terminates in a wall 5 which is pierced by a jet 6.

An extended surface apparatus 7 comprises a communication means 8 having a first end 9 adapted to be homed within bore 3 and a second end furnished with a flared skirt 10. A plurality of elements 11 are fixedly attached to the lower side of skirt 10, and project downwardly therefrom, when the dispenser is in an upstanding position.

The elements 11 are arranged in an annular array, as is indicated in Fig. 3. Some of the elements 11 are longer than others and may be of varying widths: the width of any given element may change along the length of the element and/ or some elements may be wider than others. The array of elements 11 define a central passage 12. The passage 12 is substantially coaxial with the communication means 8.

Alternatively, the elements such as those which are shown in Fig. 3 can be configured and arranged in such a way that a vortex can be created during dispensing as the liquid passes along the communication means.

This effect is created by placing the elements radially relative to the central axis of the communication means, each of said elements being curvedly shaped such that the plane in which the radii of the curved elements are located is substantially normal to the central axis of the communication means. This creates a vortex in the liquid as the liquid is imparted from the elements to the nozzle via the central passage 12.

A nozzle extension piece 13 is snap lockingly engageable with the nozzle assembly 1, and is able to be removed from the nozzle assembly for cleaning.

In operation, the vessel is partially filled with the liquid which is to be dispensed for example, a medicament.

The extended surface apparatus 7 of the present invention must be immersed in the liquid such that the elements are submerged. This can be done for example by inverting the dispenser such that the liquid, assisted by gravity, moves towards the nozzle of the dispenser. Immersion of the extended surface elements can also be achieved by shaking the dispenser.

Once the contact takes place between the liquid and the extended surface apparatus 7 of the present invention and in particular with the elements 11 of the said apparatus, the solid-liquid intermolecular attraction takes place with the result that a predetermined dose of the liquid is retained on and between the elements.

The total surface area of the elements comes in contact with the liquid almost at once, thus obviating the need for reliance on any capillary action to achieve the desired result.

The volume of the liquid retained by intermolecular attraction is dependent upon the size, thickness and number of the elements 11 in the array or arrays of elements. It is also dependent upon the spacing and surface area of contact between the liquid and the elements, along with the surface properties of the material used to form the elements with respect to the liquid.

In the embodiment shown in Fig. 2 the retention of the liquid by the elements is assisted by the skirt 10 due to the intermolecular attraction between the skirt and the liquid.

The dispensing process is activated when the container is squeezed, effectively increasing the pressure within the container. This increase in pressure, which is evenly distributed throughout the inside of the container, forces air across the elements holding the medicament which is then expressed through the communication means 8 and from jet nozzle 6. Simultaneously, air from within the container is forced through grooves 4 and mixes with the medicament being forced through the communication means 8, resulting in an aerosol being expressed through jet 6.

The quantity of medicament to be expressed is dependent upon and can be varied by varying for instance, the size of the elements, the number of elements in the array or the thickness of each of the elements.

Elements 11 are shaped as shown in Fig. 2 in order to dislodge an excess drop which may otherwise cling to the lower end of the elements. The longer elements which project beyond the shorter elements effectively provide an area of reduced molecular attraction due to the reduced number and/or greater spacing of the elements and due to their reduced size. If a droplet of medicament of too large a proportion is attached to the elements, the excess will be shed as a result of the abovementioned reduced cohesive forces at the lower end of the extended surface element, thus manifesting a significant advantage over the capillary devices.

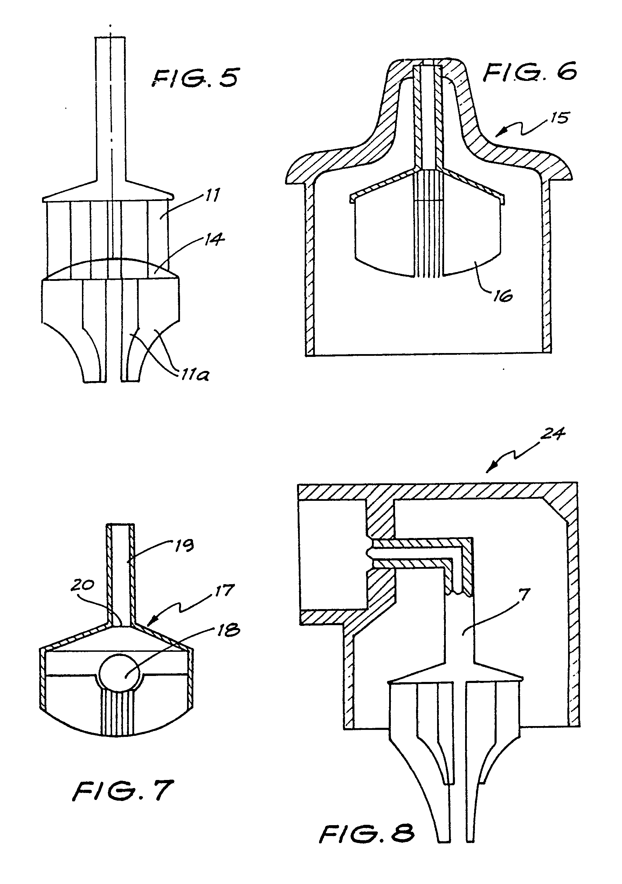

Referring now to Fig. 5, an extended surface apparatus similar to that of Fig. 2 is shown but in this instance the elements 11 support a substantially horizontally extending disk 14 below which hang a number of elements 11a.

The purpose of the disk 14 and the elements 11a, is to provide an apparatus able to repetitively hold a constant quantity of medicament. If the quantity is too large, a portion of it will overhang the disk 14 and contact one of the lower elements 11a thus isolating it from the medicament to be expressed. Elements 11a can be different in number from elements 11.

Referring now to Fig. 6, an alternate nozzle assembly 15 and alternate extended surface apparatus 16 are shown. The extended surface apparatus 16 operates in a manner similar to that described above but without the elements 11a and also without the grooves to provide the aerosol effect.

Fig. 7 shows another extended surface apparatus 17 similar to that shown in Fig. 6 but including a ball 18 which, when the dispenser is upturned, seals communication means 19 at 20, preventing medicament from seeping from the dispenser.

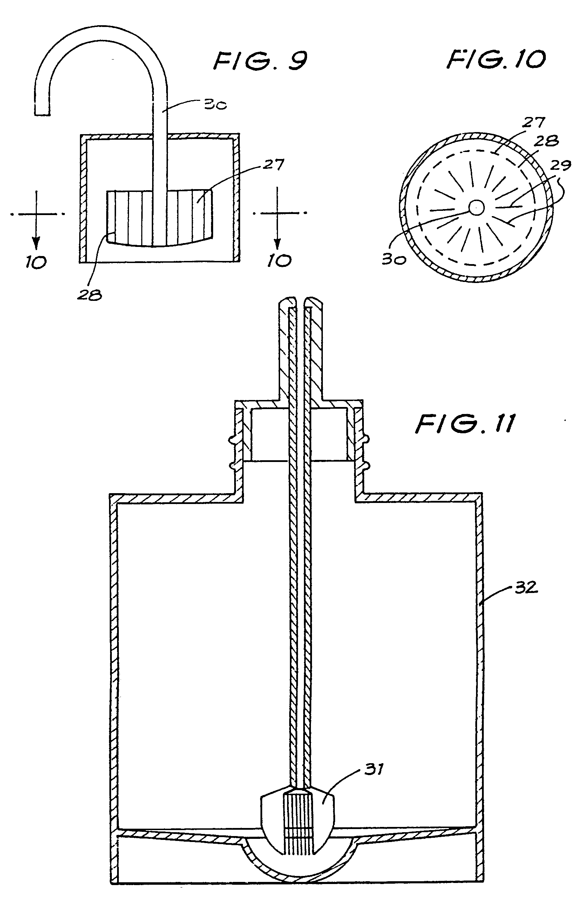

It will be appreciated that the dispensers of the prior described embodiments are suitable for dispensing nasal spray. However, nozzle assembly 24 shown in Fig. 8 is adapted for dispensing, for example, inhalant. The dispenser having nozzle assembly 24 operates in the same manner as previously described dispensers. The extended surface apparatus 7 of Fig. 8 is identical to that shown in Fig. 2.

Figs. 9 and 10 show yet another assembly and extended surface apparatus, suitable for dispensing a medicament into another container.

The extended surface apparatus in this case includes an upturned cup-like element 27 having a plurality of slots as is indicated at 28 and containing a radial array or arrays of elements 29. A communication means 30 has one end disposed within the cup-like element 27, centrally with respect to elements 29. The other end of tube 30 projects from the dispenser.

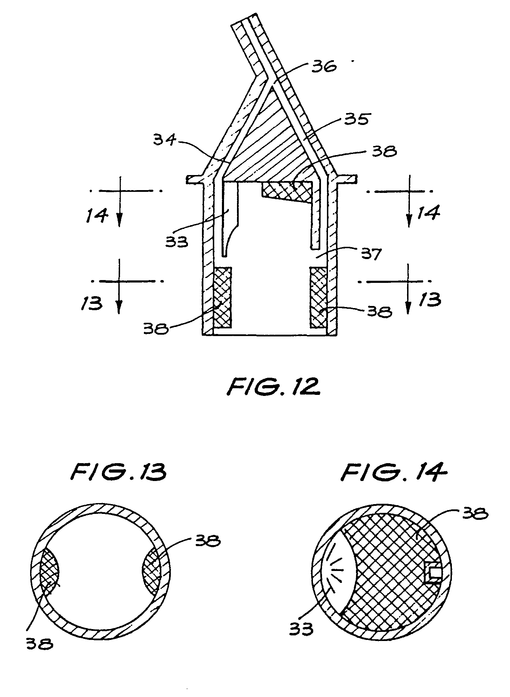

Fig. 11 shows a dispenser similar in most respects to those above described but adapted to be used in the upturned position.

An extended surface apparatus 31 is, when the vessel is in the upright position, immersed in medicament stored in vessel 32. When the dispenser is upturned, the extended surface apparatus 31 is emerged from the medicament and holds a quantity of the medicament which will be expelled when the dispenser is squeezed.

Referring to Figs. 12, 13 and 14, a further nozzle assembly is shown comprising an array of elements 33 located adjacent to fluid duct 34. An air duct 35 joins fluid duct 34 at 36 in order to create an aerosol and is open to an access port 37 within the nozzle assembly. Pad elements 38 surround both the elements 33 and the port 37. These elements are adapted to draw away any excess droplets of medicament from the elements and from the passage so that when the dispenser is squeezed only medicament attached to the element is expressed from the nozzle.

Whilst the present invention has been described with reference to a number of examples, it will be appreciated by those skilled in the art that the essence of the present invention is the utilisation of intermolecular attractive forces to separate a predetermined dose of a liquid from a larger charge of liquid for subsequent dispensing of said dose and that this invention can be applied in a multiplicity of apparatuses such as pressure packs for instance, without departing from the spirit and scope of the invention.

The term "extended surface", as used in this specification, is intended to describe surfaces which extend from the communication means. The length of the extension is one factor which controls the measured dose of the liquid because, as the elements are extended further, their surface area increases altering the amount of liquid which will adhere to the surface. Thus, the dose of liquid to be dispensed can be controlled by varying the degree of extension of the elements. The versatility of an extended surface in altering the measured dose distinguishes it from a surface which is not extended. By having the surfaces extended, relatively large surface areas can be achieved with economy of space.

The communication means used in accordance with the invention need not necessarily, of course, be a tube. All that is necessary is that when installed in a vessel the extended surface apparatus be maintained in such a position relative to an opening in the vessel (e.g. the nozzle opening) that if air or other gas is forced out of the vessel through the opening at least some of the air or other gas passes over the spaced apart elements. It will of course be understood that at the dispensing stage the elements are in a gaseous, not a liquid, medium.

It should be noted that the spacing between the elements is significant because the volume held between the elements can be controlled by the spacing. Thus, the greater the spacing the heavier the liquid which can be retained between the elements.

## Claims

1. An apparatus for use in a vessel for dispensing a liquid, comprising a nozzle assembly and an extended surface apparatus connected to the nozzle assembly, the extended surface apparatus comprising an array or arrays of spaced apart elements and communication means connecting said array or arrays and said nozzle assembly, characterised in that the elements (11; 29; 33) are arranged such that, in use of the apparatus, they can be charged with and retain a predetermined dose of the liquid, utilising intermolecular attraction between said liquid and said elements, by means of the elements being brought into contact with and then removed from the body of liquid in the vessel, and the said liquid can be delivered from the elements to the nozzle assembly (1; 15; 24) via the said communication means (8; 19; 30), whereby the apparatus can, in use, deliver a predetermined dosage of liquid.

2. An apparatus as claimed in claim 1, wherein the extended surface apparatus comprises an annular array of circumferentially spaced apart elements.

3. An apparatus as claimed in claim 2, wherein the elements of the extended surface apparatus are connected with said nozzle assembly by a communication means, one end of which opens into a central passage defined by said annular array of elements.

4. An apparatus as claimed in claim 3, wherein the said elements are fixed to a flared skirt projecting from said one end of said communication means.

5. An apparatus as claimed in any of claims 2 to 4, wherein said array of elements comprises a plurality of long elements interleaved with shorter elements.

6. An apparatus as claimed in any of claims 2 to 5, wherein the extended surface apparatus includes a radially extending disk supported by said elements, and from which extend a further array of elements.

7. An apparatus as claimed in any one of the preceding claims, wherein said elements are radially disposed and curvedly shaped, so as to create a vortex action whilst liquid passes along said communication means.

8. An apparatus as claimed in any one of claims 2 to 7, wherein said elements are tapered.

9. An apparatus as claimed in any one of claims 2 to 8, including a gravitationally sealed one-way valve controlling flow along said communication means.

10. An apparatus as claimed in claim 9, wherein said one-way valve comprises a ball entrapped by said elements, and adapted to seal against one end of said communication means.

11. An apparatus as claimed in claim 1, wherein said extended surface apparatus is contained within the nozzle assembly of the vessel.

12. An apparatus as claimed in claim 11, including an absorbent pad disposed adjacent to said array of elements.

13. An apparatus as claimed in claim 11 or claim 12, including an air-duct through which air may pass from the interior of said vessel to mix with said dose of liquid, prior to expulsion from said vessel.

14. An apparatus as claimed in claim 13, wherein a further absorbent pad is disposed adjacent the opening, within the dispenser, of said air-duct.

15. An apparatus as claimed in claim 1, wherein the extended surface apparatus includes an upturned cup having a plurality of slots disposed in a radial array around said cup, and an annular array of spaced apart elements disposed within and supported by said cup.

16. An apparatus as claimed in claim 15, wherein the extended surface apparatus further comprises a communication means having a first end disposed within a passage defined by said annular array of elements and a second end connected with said nozzle assembly.

17. A vessel for dispensing a liquid, comprising an apparatus according to any one of claims 1 to 6.

18. A method of dispensing a predetermined dosage of a liquid from a collapsible vessel containing a liquid and including an apparatus comprising a nozzle assembly and an extended surface apparatus connected to the nozzle assembly, the extended surface apparatus comprising an array or arrays of spaced apart elements and communication means connecting said array or arrays and said nozzle assembly, wherein the elements are brought into contact with and then removed from the liquid in the vessel, a predetermined dose of the liquid being retained on the elements utilising intermolecular attraction between the said liquid and the said elements, and expelling a predetermined dosage of liquid through the nozzle assembly by forcing air across the elements so that liquid retained on the elements is conveyed via the communication means to the nozzle assembly.

## Patentansprüche

1. Eine Vorrichtung zur Verwendung in einem Gefäß für die Abgabe einer Flüssigkeit, umfassend eine Düsenbaugruppe und eine mit der Düsenbaugruppe verbundene Oberflächenerstreckungseinrichtung, die eine oder mehrere Gruppen im Abstand angeordneter Elemente und Kommunikationsmittel umfaßt, die die Gruppe(n) und die Düsenbaugruppe verbinden, dadurch gekennzeichnet, daß die Elemente derart angeordnet sind, daß sie bei Benutzung der Vorrichtung mit einer vorgegebenen Dosis der Flüssigkeit beladen werden können und diese halten unter Ausnutzung intermolekularer Anziehung zwischen der Flüsigkeit und den Elementen, indem die Elemente mit dem Flüssigkeitsvolumen in dem Gefäß in Kontakt gebracht und dann aus ihm entfernt werden, und daß die Flüssigkeit von den Elementen über die Kommunikationsmittel (8, 19, 30) der Düsenbaugruppe (1, 15, 24) zuführbar ist, wodurch die Vorrichtung bei Benutzung eine vorbestimmte Flüssigkeitsdosis abgeben kann.

2. Ein Vorrichtung nach Anspruch 1, bei der die Oberflächenerstreckungseinrichtung eine ringförmige Gruppe von Elementen mit Umfangsabstand umfaßt.

3. Eine Vorrichtung nach Anspruch 2, bei der die Elemente der Oberflächenerstreckungseinrichtung mit der Düsenbaugruppe über Kommunikationsmittel verbunden sind, deren eines Ende sich in einen zentralen Durchlaß, begrenzt von der ringförmigen Elementengruppe, öffnet.

4. Eine Vorrichtung nach Anspruch 3, bei der die Elemente an einer ausladenden Schürze befestigt sind, die sich von dem genannten einen Ende der Kommunikationsmittel erstreckt.

5. Eine Vorrichtung nach einem der Ansprüche 2 bis 4, bei der die Elementengruppe eine Mehrzahl von langen Elementen alternierend mit küreren Elementen umfaßt.

6. Eine Vorrichtung nach einem der Ansprüche 2 bis 5, bei der die Oberflächenerstreckungseinrichtung eine von den Elementen getragene sich radial erstreckende Scheibe umfaßt, von der sich eine weitere Elementengruppe erstreckt.

7. Eine Vorrichtung nach einem der vorgangehenden Ansprüche, bei der die Elemente radial angeordnet und gekrümmt sind, um so eine Wirbelwirkung zu erzielen, während Flüssigkeit längs der Kommunikationsmittel strömt.

8. Eine Vorrichtung nach einem der Ansprüche 2 bis 7, bei der die Elemente sich verjüngen.

9. Eine Vorrichtung nach einem der Ansprüche 2 bis 8, umfassend ein schwerkraftabdichtendes Rückschlagventil, des die Strömung längs der Kommunikationsmittel steuert.

10. Eine Vorrichtung nach Anspruch 9, bei der das Rückschlagventil eine von den Elementen umschlossene Kugel umfaßt, ausgebildet zum Abdichten gegen ein Ende der Kommunikationsmittel.

11. Eine Vorrichtung nach Anspruch 1, bei der die Oberflächenerstreckungseinrichtung in der Düsenbaugruppe des Gefäßes enthalten ist.

12. Eine Vorrichtung nach Anspruch 11 mit einem Absorbierkissen, das bei der Elementengruppe angeordnet ist.

13. Eine Vorrichtung nach Anspruch 11 oder 12 mit einer Luftleitung, durch die Luft aus dem Innern des Gefäßes strömen kann zum Mischen mit der Flüssigkeitsdosis vor der Expulsion aus dem Gefäß.

14. Eine Vorrichtung nach Anspruch 13, bei der ein weiteres Absorbierkissen innerhalb des Dispensers nahe der Öffnung der Luftleitung. angeordnet ist.

15. Eine Vorrichtung nach Anspruch 1, bei der die Oberflächenerstreckungseinrichtung einen aufwärts gekehrten Topf mit einer Mehrzahl von Schlitzen umfaßt, angeordnet in einer radialen Gruppe um den Topf, sowei eine ringförmige Gruppe von beabstandeten Elementen, angeordnet in und abgestützt von dem Topf.

16. Eine Vorrichtung nach Anspruch 15, bei der die Oberflächenerstreckungseinrichtung ferner eine Kommunikationsmittel umfaßt, das mit einem ersten Ende innerhalb eines von der ringförmigen Gruppe von Elementen begrenzten Durchlasses angeordnet und mit einem zweiten Ende mit der Düsenbaugruppe verbunden ist.

17. Ein Gefäß für Flüssigkeitsabgabe mit einer Vorrichtung nach einem der Ansprüche 1 bis 6.

18. Ein Verfahren zum Abgeben einer vorbestimmten Dosis einer Flüssigkeit aus einem kollabierbaren Gefäß, das eine Flüssigkeit enthält und eine Vorrichtung aufweist, die eine Düsenbaugruppe und eine mit der Düsenbaugruppe verbundene Oberflächenerstreckungseinrichtung umfaßt, die eine Gruppe oder Gruppen beabstandeter Elemente sowie Kommunikationsmittel umfaßt, die die Gruppe(n) mit der Düsenbaugruppe verbinden, wobei die Elemente in Kontakt mit der Flüssigkeit in dem Gefäß gebracht werden und dann aus der Flüssigkeit in dem Gefäß herausgenommen werden, wobei eine vorbestimmte Dosis der Flüssigkeit auf den Elementen unter Ausnutzung der intermolekularen Anziehung zwischen der Flüssigkeit und den Elementen zurückgehalten wird, wobei eine vorbestimmte Flüssigkeitsdosis durch die Düsenbaugruppe ausgetragen wird, indem Luft über die Elemente zu strömen gezwungen wird, so daß auf den Elementen zurückgehaltene Flüssigkeit über die Kommunikationsmittel der Düsenbaugruppe zugeführt wird.

**Revendications**

1. Un appareil destiné à être utilisé dans un récipient afin de distribuer un liquide, comprenant un ensemble d'ajutage et un appareil à surface agrandie relié à l'ensemble d'ajutage, l'appareil à surface agrandie comprenant un réseau ou des réseaux d'éléments espacés entre eux et des moyens de communication reliant ledit réseau ou lesdits réseaux audit ensemble d'ajutage, caractérisé en ce que les éléments (11; 29; 33) sont agencés de telle façon que, lors de l'utilisation de l'appareil, ils puissent être chargés d'une dose prédéterminée du liquide et la retenir, en utilisant l'attraction intermoléculaire entre ledit liquide et lesdits éléments en amenant les éléments en contact avec le corps du liquide dans le récipient et en les en enlevant ensuite, et en ce que ledit liquide peut être envoyé à partir des éléments vers l'ensemble d'ajutage (1; 15; 24) à l'aide desdits moyens de communication (8; 19; 30), grâce à quoi l'appareil peut, lors de l'utilisation, fournir une dose prédéterminée de liquide.

2. Un appareil selon la revendication 1, dans lequel l'appareil à surface agrandie comprend un réseau annulaire d'éléments espacés circonférentiellement entre eux.

3. Un appareil selon la revendication 2, dans lequel lesdits éléments de l'appareil à surface agrandie sont reliés audit ensemble d'ajutage par un moyen de communication, dont une extrémité s'ouvre dans un passage central défini par ledit réseau annulaire d'éléments.

4. Un appareil selon la revendication 3, dans lequel lesdits éléments sont fixés à une collerette évasée, en saillie à partir de ladite extrémité dudit moyen de communication.

5. Un appareil selon l'une quelconque des revendications 2 à 4, dans lequel ledit réseau d'éléments comprend plusieurs éléments longs imbriqués avec des éléments plus courts.

6. Un appareil selon l'une quelconque des revendications 2 à 5, dans lequel l'appareil à surface agrandie comprend un disque, s'étendant radialement supporté par lesdits éléments, et à partir duquel s'étend un autre réseau d'éléments.

7. Un appareil selon l'une quelconque des précédentes revendications, dans lequel lesdits éléments sont disposés radialement et sont d'une forme incurvée, de façon à créer une action de vortex pendant qu'un liquide passe le long dudit moyen de communication.

8. Un appareil selon l'une quelconque des revendications 2 à 7, dans lequel lesdits éléments sont coniques.

9. Un appareil selon l'une quelconque des revendications 2 à 8, comprenant un valve à une voie qui se ferme par gravité et qui régle le débit le long dudit moyen de communication.

10. Un appareil selon la revendication 9, dans lequel ladite valve une voie comprend une bille piégée par lesdits éléments, et apte à former un joint étanche contre une extrémité dudit moyen de communication.

11. Un appareil selon la revendication 1, dans lequel ledit appareil à surface agrandie est contenu à l'intérieur de l'ensemble d'ajutage du récipient.

12. Un appareil selon la revendication 11, comprenant un tampon absorbant disposé adjacent audit réseau d'éléments.

13. Un appareil selon la revendication 11 ou la revendication 12, comprenant un conduit d'air à travers lequel de l'air peut passer depuis l'intérieur dudit récipient pour se mélanger avec ladit dose de liquide, avant l'expulsion dudit récipient.

14. Un appareil selon la revendication 13, dans lequel un autre tampon absorbant est disposé adjacent à l'orifice, à l'intérieur du distributeur, dudit conduit d'air.

15. Un appareil selon la revendication 1, dans lequel l'appareil à surface agrandie comprend une coupelle tournée vers le haut, comportant plusieurs fentes disposées dans un réseua radial autour de ladite coupelle, et un réseau annulaire d'éléments espacés entre aux disposées à l'intérieur de ladite coupelle et supportés par elle.

16. Un appareil selon la revendication 15, dans lequel l'appareil à surface agrandie comprend de plus un moyen de communication comportant une première extrémité disposée à l'intérieur d'un passage défini par ledit réseau annulaire d'éléments et une seconde extrémité reliée audit ensemble d'ajutage.

17. Un récipient destiné à distribuer un liquide, comprenant un appareil selon l'une quelconque des revendications 1 à 6.

18. Un procédé de distribution d'un dosage prédéterminé d'un liquide depuis un récipient qui peut être pressé, contenant un liquide et comprenant un appareil relié à un ensemble d'ajutage et un appareil à surface agrandie relié à l'ensemble d'ajutage, l'appareil à surface agrandie comprenant un réseau ou des réseaux d'éléments espacés entre eux et des moyens de communication reliant ledit réseau ou lesdits réseaux audit ensemble d'ajutage, dans lequel les éléments sont amenés en contact avec le liquide du récipient et en sont ensuite enlevés, une zone prédéterminée du liquide étant retenue sur les éléments en utilisant l'attraction intermoléculaire entre ledit liquide et lesdits éléments, et expulsant une dose prédéterminée de liquide à travers l'ensemble d'ajutage en forçant de l'air à travers les éléments de façon que du liquide retenu sur les éléments soit transporté par le moyen de communication vers l'ensemble d'ajutage.

EP 0 166 552 B1

FIG.1

FIG.2

FIG.3

FIG.4

1

*FIG. 5*

*FIG. 6*

11

14

11a

15

16

*FIG. 7*

19

20

17

18

24

7

*FIG. 8*

2

FIG. 9

FIG. 10

FIG. 11

FIG. 12

FIG. 13                    FIG. 14